# EUROPEAN PATENT APPLICATION

(11) **EP 4 266 463 A1**
(43) Date of publication of application: **25.10.2023**
(21) Application number: 22206837.1
(22) Date of filing: 11.11.2022
(51) Int. Cl.: H01M 50/209, H01M 50/242, H01M 50/244, H01M 50/502

(54) **BATTERY PACK AND METHOD FOR ASSEMBLING BATTERY PACK**

(30) Priority: 11.04.2022 CN 202210376217
(71) Applicant: CALB Co., Ltd., Changzhou City, Jiangsu Province (CN)
(72) Inventor: WANG, Shuaifeng, Changzhou City, Jiangsu Province (CN); JIANG, Xinwei, Changzhou City, Jiangsu Province (CN); YANG, Xulong, Changzhou City, Jiangsu Province (CN)
(74) Representative: Becker, Eberhard

(57) **Abstract**

A battery pack includes a battery box (10), and first and second batteries (20, 30). The first battery (20) is disposed in the battery box (10) and includes a first stack surface (21). The first stack surface (21) includes a first peripheral region (211) and a first intermediate region (212). The second battery (30) is disposed in the battery box (10) and includes a second stack surface (31). The second stack surface includes (31) a second peripheral region (311) and a second intermediate region (312). At least a part of the first peripheral region (211) is opposite to the second peripheral region (311), and at least a part of the first intermediate region (212) is opposite to the second intermediate region (312), and a gap (1) is defined between the at least a part of the first peripheral region (211) and the second peripheral region (311).

## Description

### BACKGROUND

### Technical Field

The present disclosure relates to the technical field of batteries, and in particular, to a battery pack and a method for assembling the battery pack.

### Description of Related Art

In the related art, a battery pack may include a plurality of batteries, and during the process of loading the batteries into the battery box, a pre-pressing force will be formed between the batteries, that is, there will be a pressing force between the batteries.

However, after the battery pack is used for a long time, the battery will swell, and the squeezing force between the large surfaces of adjacent batteries will increase, which will affect the service life of batteries.

### SUMMARY

The present disclosure provides a battery pack and a method for assembling the battery pack.

According to a first aspect of the present disclosure, a battery pack is provided. The battery includes a battery box, a first battery, and a second battery. The first battery is disposed in the battery box and includes a first stack surface. The first stack surface includes a first peripheral region and a first intermediate region, and the first peripheral region is arranged around the first intermediate region. The second battery is disposed in the battery box and adjacent to the first battery, and includes a second stack surface. The second stack surface includes a second peripheral region and a second intermediate region, and the second peripheral region is arranged around the second intermediate region. The first stack surface and the second stack surface are arranged directly opposite to each other, so that at least a part of the first peripheral region is arranged directly opposite to the second peripheral region, and at least a part of the first intermediate region is arranged directly opposite to the second intermediate region, and a gap is defined between the at least a part of the first peripheral region and the second peripheral region.

According to a second aspect of the present disclosure, a method for assembling a battery pack is provided. The method includes the following steps. Arranging a first battery and a second battery adjacently in a battery box in a battery stacking direction of the battery pack. A gap is defined between the first battery and the second battery directly opposite to each other, such that a pre-pressing force is avoided from being generated between the first battery and the second battery, and the battery stacking direction is perpendicular to the larger surfaces of the first battery and the second battery.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural view of a battery pack according to an exemplary embodiment.
FIG. 2 is an exploded structural view of a battery pack according to an exemplary embodiment.
FIG. 3 is a partial schematic view of a battery pack according to an exemplary embodiment.
FIG. 4 is a schematic structural view of a first battery of a battery pack according to a first exemplary embodiment.
FIG. 5 is a schematic structural view of a first battery of a battery pack according to a second exemplary embodiment.
FIG. 6 is a schematic structural view of a first battery of a battery pack according to a third exemplary embodiment.
FIG. 7 is a schematic structural view of a first battery of a battery pack according to a fourth exemplary embodiment.
FIG. 8 is a schematic structural view of a second battery of a battery pack according to an exemplary embodiment.
FIG. 9 is a schematic structural view of a first battery of a battery pack according to a fifth exemplary embodiment.
FIG. 10 is a schematic flowchart of a method for assembling a battery pack according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

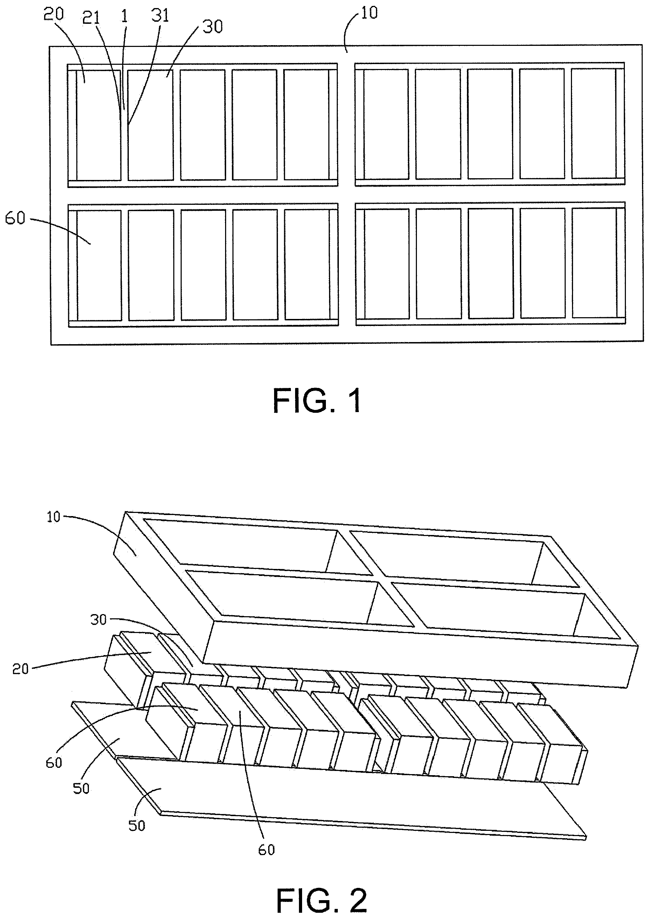

An embodiment of the present disclosure provides a battery pack, please refer to FIG. 1 to FIG. 8. The battery pack includes: a battery box 10, a first battery 20, and a second battery 30. The first battery 20 is arranged in the battery box 10, and the first battery 20 includes a first battery stack surface 21. The first stack surface 21 includes a first peripheral region 211 and a first intermediate region 212, and the first peripheral region 211 is arranged around the first intermediate region 212. The second battery 30 is arranged in the battery box 10, is arranged adjacent to the first battery 20, and the second battery 30 includes a second stack surface 31. The second stack surface 31 includes a second peripheral region 311 and a second intermediate region 312, and the second peripheral region 311 is arranged around the second intermediate region 312. The first stack surface 21 and the second stack surface 31 are disposed directly opposite to each other, so that at least a part of the first peripheral region 211 is disposed directly opposite to the second peripheral region 311, at least a part of the first intermediate region 212 is disposed directly opposite to the second intermediate region 312, and a gap 1 is defined between the at least a part of the first peripheral region 211 and the second peripheral region 311.

A battery pack in an embodiment of the present disclosure includes a battery box 10, a first battery 20 and a second battery 30. The first battery 20 and the second battery 30 are arranged in the battery box 10, and there are no other components arranged between the first battery 20 and the second battery 30 arranged adjacent to each other, so as to ensure that there is a gap 1 defined between the first battery 20 and the second battery 30, that is, during the assembly process of the first battery 20 and the second battery 30, the gap 1 may be formed between the first battery 20 and the second battery 30, so as to avoid a squeezing force from being formed between the first battery 20 and the second battery 30. In this manner, after the battery pack is used for a long time, the gap 1 between the first battery 20 and the second battery 30 may provide space allowing for the swollen batteries, thereby increasing the service life of the battery pack and improving the performance of the battery pack.

The first battery 20 includes a first stack surface 21, the second battery 30 includes a second stack surface 31, and the first stack surface 21 and the second stack surface 31 are disposed directly opposite to each other, that is, the stacking direction of the first battery 20 and the second battery 30 is substantially perpendicular to the first stack surface 21 and the second stack surface 31.

The first stack surface 21 and the second stack surface 31 are directly opposite to each other, that is, there is no third component, such as a buffer pad, a buffer bracket, etc., disposed between the first stack surface 21 and the second stack surface 31. However, the first stack surface 21 and the second stack surface 31 are directly opposite to each other, it is not excluded that during the process of fixing the first battery 20 and the second battery 30 in the battery box 10, some structures are formed between the first stack surface 21 and the second stack surface 31 due to assembly. For example, during the process of connecting the first battery 20 and the second battery 30 to the battery box 10 through an adhesive, a part of the adhesive is formed between the first stack surface 21 and the second stack surface 31 due to overflow. Nevertheless, such structure is formed due to improper or inevitable operation during the assembly process, and is not a third component provided for a special purpose, so this situation is also included in the embodiment in which the first stack surface 21 and the second stack surface 31 are directly opposite to each other. The first stack surface 21 and the second stack surface 31 are directly opposite to each other, and the emphasis lies in that there is no third component provided between the first stack surface 21 and the second stack surface 31 for a special purpose, but the formation of other structures is not excluded during the assembly process.

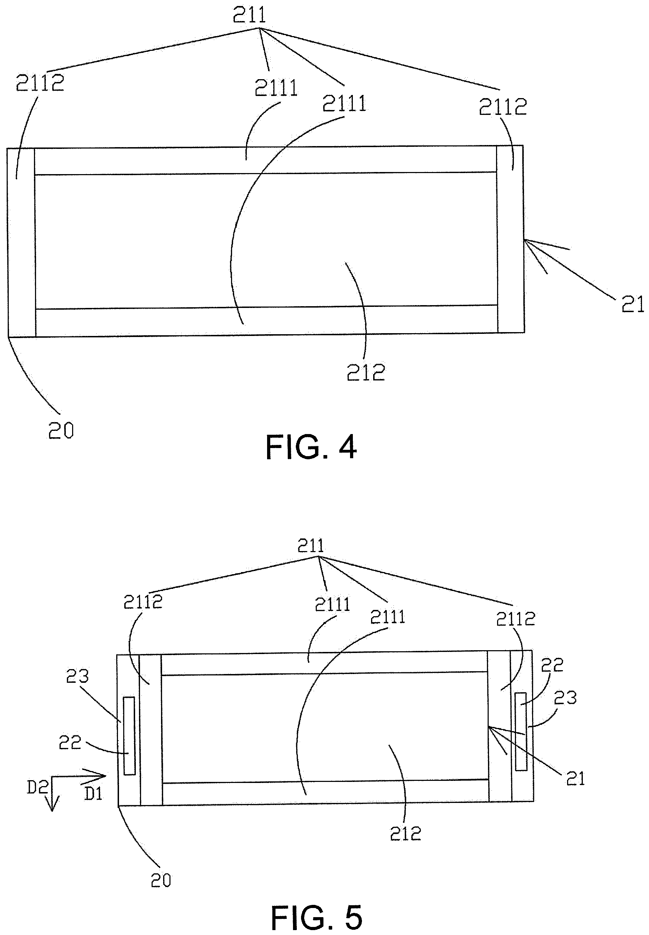

Referring to FIG. 4 to FIG. 8, the first stack surface 21 includes a first peripheral region 211 and a first intermediate region 212. The first peripheral region 211 is arranged around the first intermediate region 212, and the second stack surface 31 includes a second peripheral region 311 and a second intermediate region 312. The second peripheral region 311 is disposed around the second intermediate region 312, and the first stack surface 21 and the second stack surface 31 are disposed directly opposite to each other, so that at least a part of the first peripheral region 211 is disposed opposite to the second peripheral region 311, and at least a part of the first intermediate region 212 is opposite to the second peripheral region 311. In this manner, the first battery 20 and the second battery 30 may be grouped together, and the space utilization rate of the battery box 10 may be improved.

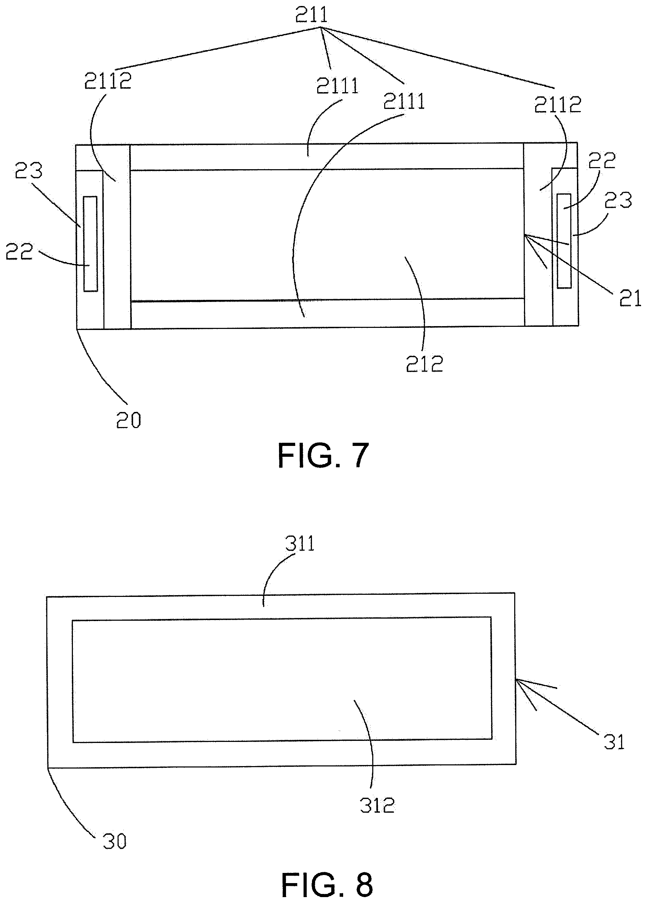

Referring to FIG. 4 and FIG. 8, the area of the first stack surface 21 may be equal to the area of the second stack surface 31. For example, the circumferential edge of the first stack surface 21 and the circumferential edge of the second stack surface 31 are substantially rectangular. Under the circumstances, the first intermediate region 212 is substantially a rectangular body, and the first peripheral region 211 is substantially a rectangular ring, which is formed by splicing four rectangular bodies. Correspondingly, the second intermediate region 312 is substantially a rectangular body, and the second peripheral region 311 is substantially a rectangular ring, which is formed by splicing four rectangular bodies. As such, the first peripheral region 211 and the second peripheral region 311 are directly opposite to each other, and the first intermediate region 212 and the second intermediate region 312 are directly opposite to each other.

Referring to FIG. 5 to FIG. 8, the area of the first stack surface 21 may not be equal to the area of the second stack surface 31. For example, one side of the first battery 20 facing the second battery 30 is provided with a recessed portion, so that the area of the first stack surface 21 is smaller than that of the second stack surface 31. For example, as shown in FIG. 5 and FIG. 8, the recessed portion is substantially a rectangular recess. Under the circumstances, the first intermediate region 212 is substantially a first rectangular body, and the first peripheral region 211 is substantially a first rectangular ring. Correspondingly, the second intermediate region 312 is substantially a rectangular body, and the second peripheral region 311 is substantially a rectangular ring. In this configuration, a part of the first peripheral region 211 and the second peripheral region 311 may be arranged directly opposite to each other, and another part of the first peripheral region 211 and the second intermediate region 312 may be arranged directly opposite to each other, and the first intermediate region 212 and the second intermediate region 312 are directly opposite to each other.

It should be noted that during the use of the battery pack, the first battery 20 and the second battery 30 might swell. Under the circumstances, the swelling amount of the first intermediate region 212 and the second intermediate region 312 will be greater than that of the first peripheral region 211 and the second peripheral region 3110, so even if a gap 1 is formed between the first battery 20 and the second battery 30 during the assembly process, the first intermediate region 212 and the second intermediate region 312 are most likely to be in contact. The swelling amount of the first peripheral region 211 and the second peripheral region 311 is relatively small, so the gap 1 is still formed between at least a part of the first peripheral region 211 and the second peripheral region 311.

In some embodiments, a gap 1 may be formed between the whole first peripheral region 211 and the whole second peripheral region 311.

In some embodiments, a gap 1 may be formed between a part of the first peripheral region 211 and a part of the second peripheral region 311.

In some embodiments, a gap 1 may be formed between the whole first intermediate region 212 and the whole second intermediate region 312.

In some embodiments, a gap 1 may be formed between a part of the first intermediate region 212 and a part of the second intermediate region 312.

In some embodiments, the whole first intermediate region 212 may be in contact with the whole second intermediate region 312.

It should be noted that, as the use time of the battery pack increases, the swelling amount of the first battery 20 and the second battery 30 will increase. Therefore, during the assembly process, even if there is a gap 1 between the first battery 20 and the second battery 30, and as the use time of the battery pack increases, the gap 1 between the first battery 20 and the second battery 30 will gradually decrease. For example, a part of the first intermediate region 212 may be gradually brought into contact with a part of the second intermediate region 312 while the gap therebetween decreases. Moreover, on basis that the use time further increases, the whole first intermediate region 212 may be in contact with the whole second intermediate region 312. However, during this process, since the first peripheral region 211 and the second peripheral region 311 are located in the peripheries of the first battery 20 and the second battery 30, respectively, under the circumstances, the swelling amount generated by the first peripheral region 211 and the second peripheral region 311 will be relatively small. Or, in some extreme cases, it is not excluded that the first peripheral region 211 and the second peripheral region 311 do not swell. Therefore, there will still be a gap 1 between at least a part of the first peripheral region 211 and the second peripheral region 311.

In an embodiment, as shown in FIG. 4 to FIG. 7, the first peripheral region 211 includes two first segment bodies 2111 and two second segment bodies 2112 opposite to each other. Both ends of each of the first segment bodies 2111 are respectively connected to the two second segment bodies 2112, each of the first segment bodies 2111 extends in the length direction D1 of the first battery 20, and at least a part of each of the second segment bodies 2112 extends in the width direction D2 of the first battery 20. There is a gap 1 between a part of the first segment body 2111 and the second peripheral region 311, that is, the gap 1 is formed between the first battery 20 and the second battery 30 in the length direction of the first battery 20 and the second battery 30.

In an embodiment, the gap 1 is formed between at least a part of the second segment body 2112 and the second peripheral region 311, that is, the swelling amount of the second segment body 2112 in the width direction D2 of the first peripheral region 211 is relatively small.

The length of the first segment body 2111 in the length direction D1 of the first peripheral region 211 will be greater than the length of the second segment body 2112 in the width direction D2 of the first peripheral region 211. As the use time of the battery pack increases, the swelling amount of the first battery 20 and the second battery 30 will increase, but there will still form a gap 1 between at least a part of the first segment body 2111 and the second peripheral region 311.

As shown in FIG. 4, the first stack surface 21 is formed throughout one side of the first battery 20 facing the second battery 30. Under the circumstances, the first stack surface 21 includes a first peripheral region 211 and a first intermediate region 212, and the first peripheral region 211 includes two first segment bodies 2111 and two second segment bodies 2112 opposite to each other. Moreover, each of the first segment bodies 2111 is substantially a first rectangular structure, while each of the second segment bodies 2112 is substantially a second rectangular structure, the division of the first segment bodies 2111 and the second segment bodies 2112 may be derived from FIG. 4.

As shown in FIG. 5, the first stack surface 21 is formed partially on one side of the first battery 20 facing the second battery 30. Under the circumstances, the first stack surface 21 includes a first peripheral region 211 and a first intermediate region 212, and the first peripheral region 211 includes two first segment bodies 2111 and two second segment bodies 2112 opposite to each other. Moreover, each of the first segment bodies 2111 is substantially a first rectangular structure, while each of the second segment bodies 2112 is substantially a second rectangular structure, the division of the first segment bodies 2111 and the second segment bodies 2112 may be derived from FIG. 5.

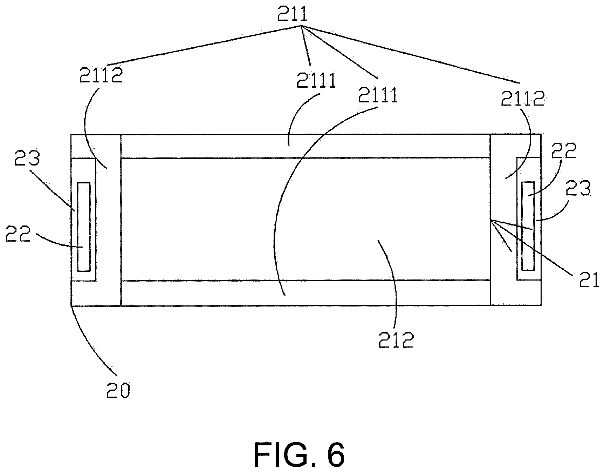

With reference to FIG. 6, the first stack surface 21 is formed partially on one side of the first battery 20 facing the second battery 30. Under the circumstances, the first stack surface 21 includes a first peripheral region 211 and a first intermediate region 212, and the first peripheral region 211 includes two first segment bodies 2111 and two second segment bodies 2112 opposite to each other. Moreover, each of the first segment bodies 2111 is substantially a first rectangular structure, while each of the second segment bodies 2112 is substantially a U-shaped structure, the division of the first segment bodies 2111 and the second segment bodies 2112 may be derived from FIG. 6.

As shown in FIG. 7, the first stack surface 21 is formed partially on one side of the first battery 20 facing the second battery 30. Under the circumstances, the first stack surface 21 includes a first peripheral region 211 and a first intermediate region 212, and the first peripheral region 211 includes two first segment bodies 2111 and two second segment bodies 2112 opposite to each other. Moreover, each of the first segment bodies 2111 is substantially a first rectangular structure, while each of the second segment bodies 2112 is substantially an L-shaped structure, the division of the first segment bodies 2111 and the second segment bodies 2112 may be derived from FIG. 7.

It should be noted that the specific structural form of the second stack surface 31 of the second battery 30 will not be repeated here, and reference may be made to the specific structural form of the first stack surface 21 of the first battery 20 described above.

In an embodiment, the first segment body 2111 is substantially a first plane, that is, on the premise that specific manufacturing errors or configuration deformation are ignored, the first segment body 2111 is the first plane. During the use of the first battery 20, the swelling amount of the first peripheral region 211 may be small, or the swelling amount of the first peripheral region 211 may be substantially zero. Therefore, the first segment body 2111 may maintain an original structural shape, namely, the first segment body 2111 may maintain in the state of the first plane.

In an embodiment, the second segment body 2112 is substantially a second plane, that is, on the premise that specific manufacturing errors or configuration deformation are ignored, the second segment body 2112 is the second plane. During the use of the first battery 20, the swelling amount of the first peripheral region 211 will be very small, or the swelling amount of the first peripheral region 211 may be substantially zero. Therefore, the second segment body 2112 may maintain the original structural shape, namely the second segment body 2112 may maintain in the state of the second plane.

In an embodiment, the size of the gap 1 is in the range of 0.2 mm to 1 mm. On the basis of capable of allowing for a certain swelling amount between the first battery 20 and the second battery 30, the space utilization rate of the battery pack may also be ensured, so as to ensure the energy density of the battery pack.

During the assembly process of the first battery 20 and the second battery 30, if the configuration error and the manufacturing error are ignored, a gap ranging from 0.2 mm to 1 mm is defined at each position of the first battery 20 and the second battery 30, that is, a gap 1 with the size of 0.2 mm to 1 mm is formed between the first stack surface 21 and the second stack surface 31, a gap 1 with the size of 0.2 mm to 1 mm is formed between the first peripheral region 211 and the second peripheral region 311, and a gap 1 with the size of 0.2 mm to 1 mm is formed between the first intermediate region 212 and the second intermediate region 312. During the use of the first battery 20 and the second battery 30, the gap 1 between the first intermediate region 212 and the second intermediate region 312 will gradually disappear. The presence of the gap 1 may provide sufficient space for buffering. Moreover, after the first intermediate region 212 and the second intermediate region 312 are brought into contact, the first battery 20 and the second battery 30 may also be fixed to each other, so as to ensure the fixing effect of the first battery 20 and the second battery 30.

In an embodiment, the size of the gap 1 is in the range of 0.4 mm to 0.6 mm. On the basis of capable of allowing for a certain swelling amount between the first battery 20 and the second battery 30, the energy density of the battery pack may be ensured, thereby improving the use performance of the battery pack.

In some embodiments, the size of the gap 1 may be 0.2 mm, 0.21 mm, 0.25 mm, 0.3 mm, 0.4 mm, 0.41 mm, 0.42 mm, 0.45 mm, 0.5 mm, 0.55 mm, 0.6 mm, 0.61 mm, 0.65 mm, 0.7 mm, 0.8 mm, 0.9 mm, 0.92 mm, 0.95 mm, 0.98 mm, 0.99 mm or 1 mm and so on.

In an embodiment, the first intermediate region 212 and the second intermediate region 312 are not in contact, that is, there is a gap 1 between the first intermediate region 212 and the second intermediate region 312. For example, after the battery pack is assembled, a gap 1 is defined between the first intermediate region 212 and the second intermediate region 312. Or, in the early stage of use of the battery pack, the swelling amount of the first intermediate region 212 and the second intermediate region 312 will be relatively small, and there is a gap 1 between the first intermediate region 212 and the second intermediate region 312.

In an embodiment, at least a part of the first intermediate region 212 is in direct contact with the second intermediate region 312, that is, there is no gap 1 between the first intermediate region 212 and the second intermediate region 312. For example, after the battery pack is used for a long time, the swelling amount of the first intermediate region 212 the second intermediate region 312 will be relatively large, the gap 1 between the first intermediate region 212 and the second intermediate region 312 will gradually decrease, and finally, the gap 1 between the first intermediate region 212 and the second intermediate region 312 might be completely eliminated.

In an embodiment, the area of the first peripheral region 211 and the area of the second peripheral region 311 are substantially equal, and the area of the first intermediate region 212 and the area of the second intermediate region 312 are substantially equal.

As shown in FIG. 4 and FIG. 8, the first stack surface 21 and the second stack surface 31 are directly opposite to each other, and in the case of ignoring the manufacturing error and configuration deformation of the first battery 20 and the second battery 30, the area of the first stack surface 21 is consistent with the area of the second stack surface 31. Therefore, the area of the first peripheral region 211 and the area of the second peripheral region 311 may be made substantially equal, the area of the first intermediate region 212 and the area of the second intermediate region 312 are substantially equal, and the gap 1 between the first peripheral region 211 and the second peripheral region 311 may be maintained all the time, and correspondingly, the gap 1 between the first intermediate region 212 and the second intermediate region 312 may be gradually eliminated.

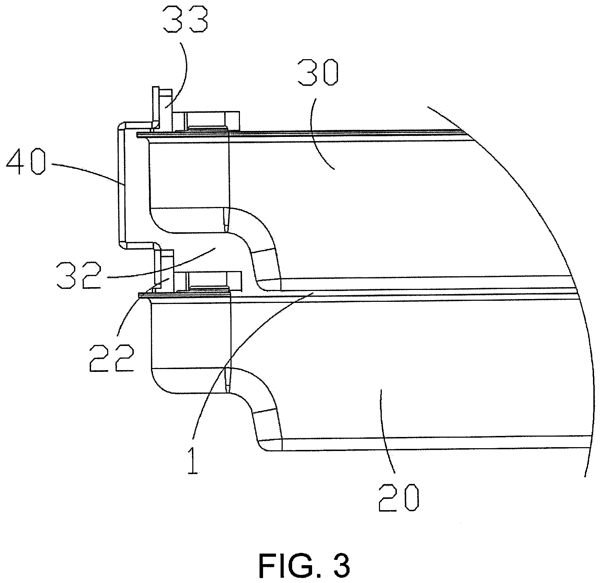

In an embodiment, as shown in FIG. 3, the first battery 20 includes a first terminal assembly 22, the first terminal assembly 22 is disposed on the first stack surface 21, and the second battery 30 includes a first recess 32. The first recess 32 is disposed toward the first stack surface 21, and a part of the first terminal assembly 22 is located in the first recess 32. The first recess 32 is located outside of the second stack surface 31, and the area of the first stack surface 21 is greater than the area of the second stack surface 31.

The area of the first stack surface 21 is greater than the area of the second stack surface 31, a first recess 32 is formed at one side of the second battery 30 facing the first stack surface 21, and the sum of the area of the bottom wall of the first recess 32 and the area of the second stack surface 31 may be equal to the area of the first stack surface 21. By arranging part of the first terminal assembly 22 in the first recess 32, the first recess 32 may be formed as avoidance for the first terminal assembly 22, so as to ensure that the first battery 20 and the second battery 30 may be conveniently arranged in the battery box 10, and the arrangement of the battery pack will not be affected by the configuration position of the first terminal assembly 22.

In an embodiment, as shown in FIG. 5 to FIG. 7, the first battery 20 includes a first terminal assembly 22 and a second recess 23, the first terminal assembly 22 is disposed in the second recess 23, and the second recess 23 is disposed toward the second battery 30, and the second recess 23 is located outside of the first stack surface 21.

As shown in FIG. 5 and FIG. 8, the area of the first stack surface 21 is less than the area of the second stack surface 31, a second recess 23 is formed at one side of the first battery 20 facing the second stack surface 31, and the sum of the area of the bottom wall of the second recess 23 and the area of the first stack surface 21 may be equal to the area of the second stack surface 31. By arranging the first terminal assembly 22 in the second recess 23, it may be avoided that the first terminal assembly 22 protrudes from the first stack surface 21, so as to ensure that the first battery 20 and the second battery 30 may be conveniently disposed in the battery box 10, and the arrangement of the battery pack will not be affected by the configuration position of the first terminal assembly 22.

In an embodiment, the battery pack further includes a conductive connector, the conductive connector is connected to the first battery 20, and the conductive connector is connected to the second battery 30, so as to fix the first battery 20 and the second battery 30. In this manner, it may be ensured that the first battery 20 and the second battery 30 may be further fixed through the conductive connector, so as to ensure that the first battery 20 and the second battery 30 may be reliably fixed in the battery box 10.

The conductive connector may include a circuit board, and the circuit board may include structures such as a voltage acquisition part, a temperature acquisition part, etc. In this case, the circuit board may be connected to the first battery 20 and the second battery 30. For example, a voltage acquisition part of the circuit board may be directly connected to the first battery 20, another voltage acquisition part of the circuit board may be directly connected to the second battery 30, and the position of the circuit board is relatively fixed. For example, the circuit board may be fixed on the battery box 10, under the circumstances, the first battery 20 and the second battery 30 may be fixed on the battery box 10 through the circuit board, so as to ensure that the first battery 20 and the second battery 30 may be reliably fixed in the battery box 10.

In an embodiment, as shown in FIG. 3, the conductive connector includes a bus bar 40. The bus bar 40 is connected to the first battery 20, and the bus bar 40 is connected to the second battery 30, so that the first battery 20 and the second battery 30 may be fixed through the bus bar 40, and it may be ensured that the first battery 20 and the second battery 30 have relatively fixed positions.

As shown in FIG. 3, both ends of the bus bar 40 may be respectively connected to the first terminal assembly 22 of the first battery 20 and the second terminal assembly 33 of the second battery 30. The bus bar 40 may realize the electrical connection between the first battery 20 and the second battery 30, and the bus bar 40 may limit the positions of the first battery 20 and the second battery 30, so as to ensure that the first battery 20 and the second battery 30 have relatively fixed positions. Further, the first terminal assembly 22 and the second terminal assembly 33 may be respectively disposed at the end portions of the first battery 20 and the second battery 30. The first terminal assembly 22 may be disposed in the first peripheral region 211 of the first stack surface 21, the second terminal assembly 33 may be disposed in the peripheral region of another stack surface of the second battery 30 opposite to the second stack surface 31, and the swelling amount of the peripheral region may be substantially zero. Therefore, the positions of the first terminal assembly 22 and the second terminal assembly 33 are relatively fixed, so that the bus bar 40 may be reliably connected to the first terminal assembly 22 and the second terminal assembly 33. Accordingly, the first battery 20 and the second battery 30 have relatively fixed positions.

It should be noted that the bus bar may connect three or more than three batteries, and the bus bar may be fixed on the battery box 10, so that the bus bar may fix various batteries, so as to ensure that each battery is reliably fixed on the battery box 10.

It should be noted that the first terminal assembly of the first battery 20 and the second terminal assembly of the second battery 30 may also be disposed on the top ends of the first battery 20 and the second battery 30 respectively, the disclosure is not limited thereto, and the type of corresponding battery may be selected according to actual requirement.

In an embodiment, the first battery 20 is bonded to the battery box 10, and the second battery 30 is bonded to the battery box 10, which not only facilitates connection, but also ensures that the first battery 20 and the second battery 30 are reliably fixed on the battery box 10.

In an embodiment, as shown in FIG. 2, the battery box 10 is provided with a fixing bracket 50, the fixing bracket 50 is connected to the first battery 20, and the fixing bracket 50 is connected to the second battery 30, so that the first battery 20 and the second battery 30 may be securely fixed on the battery box 10 through the fixing bracket 50.

The first battery 20 and the second battery 30 may be bonded to the fixing bracket 50, the first battery 20 and the second battery 30 may be clamped on the fixing bracket 50, and the first battery 20 and the second battery 30 may be arranged on the fixing bracket 50 and then arranged in battery box 10. Not only the configuration is convenient, but also the first battery 20 and the second battery 30 may be reliably fixed on the battery box 10 through the fixing bracket 50.

In an embodiment, as shown in FIG. 1 and FIG. 2, the battery pack further includes a third battery 60, and the third battery 60 is arranged in the battery box 10. The fixing bracket 50 and the battery box 10 are detachably arranged, and the fixing bracket 50 is not connected to the third battery 60, so as to prevent the third battery 60 from blocking the first battery 20 and the second battery 30 from being simultaneously detached from the battery box 10 along with the fixing bracket 50. In this manner, it is possible to realize removal of the first battery 20 and the second battery 30 separately, so as to facilitate the maintenance of the battery pack.

It should be noted that the first battery 20 and the second battery 30 are fixed on the fixing bracket 50, and the fixing bracket 50 is detachably arranged in the battery box 10, so as to ensure that the first battery 20 and the second battery 30 are stably arranged in the battery box 10. In this manner, problems such as shaking of the first battery 20 and the second battery 30 may be avoided when the battery pack is in normal use. When maintenance is performed on at least one of the first battery 20 and the second battery 30, the connection between the fixing bracket 50 and the battery box 10 may be released, so that the fixing bracket 50 is detached from the battery box 10, and the first battery 20 and the second battery 30 are taken out from the battery box 10, and subsequent maintenance may be performed. For example, at least one of the first battery 20 and the second battery 30 on the fixing bracket 50 is detached and replaced by at least one of new first battery 20 and new second battery 30, and at least one of the new first battery 20 and the new second battery 30 is arranged on the original fixing bracket 50, and afterwards, the fixing bracket 50 is subsequently arranged on the battery box 10. Or, the first battery 20, the second battery 30 and the fixing bracket 50 are directly replaced with new ones, and then arranged on the battery box 10.

The first battery 20, the second battery 30 and the fixing bracket 50 may not be fixedly connected to the third battery 60, so that when the fixing bracket 50 is removed from the battery box 10, the third battery 60 will not block the first battery 20 and the second battery 30 from being removed from the battery box 10 along with the fixing bracket 50 simultaneously.

In an embodiment, as shown in FIG. 2, the battery pack further includes another fixing bracket 50. The fixing bracket 50 is detachably arranged in the battery box 10, and the third battery 60 is fixed on the fixing bracket 50 to be arranged in the battery box 10 through the fixing bracket 50. In this manner, the third battery 60 and the fixing bracket 50 may be simultaneously detached from the battery box 10, so as to facilitate the maintenance of the battery pack. There are multiple third batteries 60, and gaps may be formed between the adjacent third batteries 60.

It should be noted that other batteries may be arranged on the fixing bracket 50 on which the first battery 20 and the second battery 30 are fixed, and the arrangement of other adjacent batteries may be derived from the arrangement of the first battery 20 and the second battery 30. Correspondingly, other batteries may be arranged on the fixing bracket 50 on which the third battery 60 is fixed. Only a part of the battery box 10 is shown in FIG. 1 and FIG. 2. The battery box 10 may further include a bottom plate, a top cover and the like, the disclosure is not limited thereto. The battery box 10 shown in FIG. 1 and FIG. 2 may be regarded as a frame structure.

In an embodiment, the first battery 20, the second battery 30 and the third battery 60 are all quadrangular prism batteries, so that the internal space of the battery box 10 may be utilized to the maximum extent to meet the energy capacity. A battery includes a cell and an electrolyte, and is the smallest unit capable of performing electrochemical reactions such as charge/discharge. The cell refers to a unit formed by winding or laminating a stack portion, and the stack portion includes a first electrode, a separator and a second electrode. When the first electrode is a positive electrode, the second electrode is a negative electrode. The polarities of the first electrode and the second electrode may be interchanged. The first battery 20, the second battery 30, and the third battery 60 may be identical. The battery pack may further include other batteries, and the number of batteries is not limited in the disclosure.

The first battery 20, the second battery 30 and the third battery 60 are all quadrangular prism batteries, that is, the first battery 20, the second battery 30 and the third battery 60 are substantially square batteries. A square battery may include six surfaces, and two adjacent surfaces may be directly connected, that is, there may be no transition surface provided between the two adjacent surfaces. It may be further considered that the edges of the two adjacent surfaces are directly connected, and the two adjacent surfaces are set vertically. The square battery may include six surfaces and multiple transition surfaces, that is, two adjacent surfaces may be connected through the transition surface, and the transition surface may be a curved surface, and further, the transition surfaces may be an arc surface.

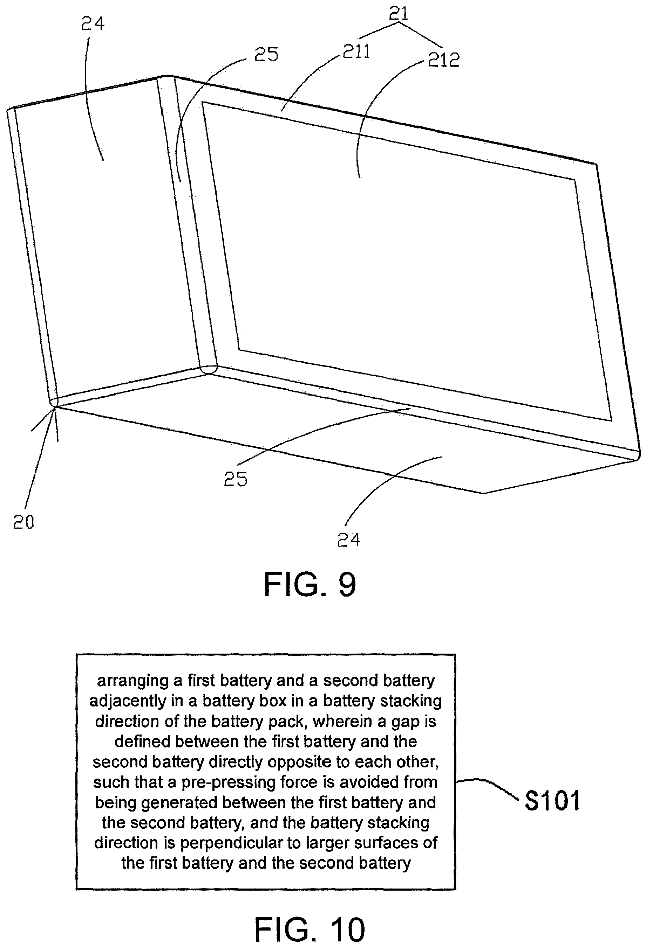

Taking the first battery 20 as an example, as shown in FIG. 9, the first battery 20 further includes a surrounding surface 24. The surrounding surface 24 is disposed adjacent to the first stack surface 21, and there is a transition surface 25 between the surrounding surface 24 and the first stack surface 21. The transition surface 25 is a curved surface, so that the corner of the first battery 20 may have an arc transition, so as to avoid forming a right-angled corner. The number of the surrounding surface 24 may be four, and the transition surface 25 is formed between the first stack surface 21 and one surrounding surface 24, that is, the transition surface 25 does not belong to the first stack surface 21 and the surrounding surface 24. The second battery 30 may be the same as the first battery 20, which is not repeated here.

An embodiment of the present disclosure further provides a method for assembling a battery pack, as shown in FIG. 10, the method includes the following step. Step S101, arranging a first battery 20 and a second battery 30 adjacently in a battery box 10 in a battery stacking direction of the battery pack. The gap 1 is defined between the first battery 20 and the second battery 30 directly opposite to each other, so as to avoid a pre-pressing force from being generated between the first battery 20 and the second battery 30. The battery stacking direction is perpendicular to the larger surfaces of the first battery 20 and the second battery 30.

In the assembly method for the battery pack in an embodiment of the present disclosure, the first battery 20 and the second battery 30 are arranged adjacently in a battery box 10, and the first battery 20 and the second battery 30 are directly opposite to each other, that is, there are no other components arranged between the adjacently arranged first battery 20 and second battery 30, as such, it may be ensured that the gap 1 is defined between the first battery 20 and the second battery 30. In this manner, it is possible to omit the pre-pressing force when assembling the first battery 20 and the second battery 30. After the battery pack is used for a long time, the gap 1 between the first battery 20 and the second battery 30 may provide space allowing for swollen batteries, thereby increasing the service life of the battery pack, and improving the performance of the battery pack.

It should be noted that the first battery 20 and the second battery 30 are arranged adjacently in the battery box 10, and the disclosure provides no limitation to the sequence of arranging the first battery 20 and the second battery 30. For example, the first battery 20 and the second battery 30 may be arranged in the battery box 10 in sequence, or the first battery 20 and the second battery 30 may be arranged in the battery box 10 simultaneously, or the second battery 30 and the first battery 20 may be arranged in the battery box 10 in sequence.

There is the gap 1 formed between the first battery 20 and the second battery 30, that is, no squeezing force is generated between the first battery 20 and the second battery 30 during the assembly process. In this manner, it may be ensured that the first battery 20 and the second battery 30 may be individually arranged in the battery box 10, so as to provide a buffer space for swelling of the first battery 20 and the second battery 30.

The larger surface of the first battery 20 is the surface with the largest area of the first battery 20, and the larger surface of the second battery 30 is the surface with the largest area of the second battery 30. Taking the first battery 20 as an example, if the first battery 20 is a quadrangular prism battery, and the first battery 20 is not provided with any recess, then the first battery 20 may have two opposite larger surfaces. For example, the first stack surface 21 and another surface opposite thereto of the first battery 20 are two opposite larger surfaces of the first battery 20. As shown in FIG. 5 to FIG. 7, the first battery 20 is provided with a recess. Under the circumstances, another surface opposite to the first stack surface 21 of the first battery 20 is the larger surface of the first battery 20. Certainly, it is not excluded that another surface opposite to the first stack surface 21 of the first battery 20 may also be provided with a corresponding recess. After the battery is used for a long time, the swelling occurred on the larger surface is the most dramatic. In this embodiment, the gap 1 is formed between the first battery 20 and the second battery 30, so as to provide a buffer space allowing for swelling of the first battery 20 and the second battery 30.

In an embodiment, the step of arranging the first battery 20 and the second battery 30 adjacently in the battery box 10 includes: arranging the first battery 20 and the second battery 30 in the battery box 10 in sequence, so as to ensure that a gap 1 may be formed between the first battery 20 and the second battery 30.

In an embodiment, the step of arranging the first battery 20 and the second battery 30 adjacently in the battery box 10 includes: arranging the first battery 20 and the second battery 30 simultaneously in the battery box 10, which not only improves the configuration efficiency, but also makes it possible to control the configuration positions of the first battery 20 and the second battery 30.

The first battery 20 and the second battery 30 may be arranged simultaneously through one assembly tool. For example, the first battery 20 and the second battery 30 may be arranged simultaneously through a clamping jaw. Alternatively, the first battery 20 and the second battery 30 may be arranged on a fixed structure first, and then the fixed structure is arranged on the battery box 10, so that the first battery 20 and the second battery 30 are simultaneously arranged on the battery box 10.

In an embodiment, the step of arranging the first battery 20 and the second battery 30 adjacently in the battery box 10 further includes: bonding the first battery 20 to the battery box 10 and bonding the second battery 30 to the battery box 10. Not only that the connection is convenient, but also it may be ensured that the first battery 20 and the second battery 30 are reliably fixed on the battery box 10.

In an embodiment, the step of arranging the first battery 20 and the second battery 30 adjacently in the battery box 10 further includes: connecting the first battery 20 and the second battery 30 to the battery box 10 through the fixing bracket 50. Not only that the configuration is convenient, but also the stability of the configuration can be ensured.

The first battery 20 and the second battery 30 may be bonded on the fixing bracket 50, the first battery 20 and the second battery 30 may be clamped on the fixing bracket 50, and the first battery 20 and the second battery 30 may be arranged on the fixing bracket 50, and then arranged in the battery box 10. Not only the configuration is convenient, but also the first battery 20 and the second battery 30 may be reliably fixed on the battery box 10 through the fixing bracket 50.

In an embodiment, the fixing bracket 50 is detachably connected to the battery box 10, so that after the connection between the fixing bracket 50 and the battery box 10 is released, the first battery 20 and the second battery 30 are simultaneously detached along with the fixing bracket 50 from the battery box 10, so that it is convenient to replace the first battery 20 and the second battery 30.

In an embodiment, the assembling method for the battery pack further includes: arranging the third battery 60 on the battery box 10. The third battery 60 is not fixedly connected to the fixing bracket 50, so as to prevent the third battery 60 from blocking the first battery 20 and the second battery 30 from being simultaneously detached from the battery box 10 along with the fixing bracket 50. In this manner, the first battery 20 and the second battery 30 may be removed separately, thereby facilitating the maintenance of the battery pack.

The first battery 20 and the second battery 30 are fixed on the fixing bracket 50, and the fixing bracket 50 is detachably arranged in the battery box 10, so as to ensure that the first battery 20 and the second battery 30 are stably arranged in the battery box 10. When the battery pack is in normal use, problems such as shaking of the first battery 20 and the second battery 30 may be avoided. When maintenance is performed on at least one of the first battery 20 and the second battery 30, the connection between the fixing bracket 50 and the battery box 10 may be released, so that the fixing bracket 50 can be detached from the battery box 10, and that the first battery 20 and the second battery 30 are taken out from the battery box 10, and subsequent maintenance may be performed. For example, at least one of the first battery 20 and the second battery 30 on the fixing bracket 50 is removed and replaced by at least one of new first battery 20 and new second battery 30, and the at least one of the new first battery 20 and the new second battery 30 is arranged on the original fixing bracket 50, and afterwards, the fixing bracket 50 is subsequently arranged on the battery box 10. Or, the first battery 20, the second battery 30 and the fixing bracket 50 are directly replaced with new ones, and then arranged on the battery box 10.

The first battery 20, the second battery 30 and the fixing bracket 50 may not be fixedly connected to the third battery 60, so that when the fixing bracket 50 is removed from the battery box 10, the third battery 60 will not block the first battery 20 and the second battery 30 from being simultaneously removed from the battery box 10 along with the fixing bracket 50.

In an embodiment, the assembling method for the battery pack further includes: fixing the third battery 60 to another fixing bracket 50. The fixing bracket 50 is detachably arranged in the battery box 10, so that the third battery 60 and the fixing bracket may be removed simultaneously from the battery box 10, so as to facilitate the maintenance of the battery pack. There may be a plurality of third batteries 60, and gaps may be formed between adjacent third batteries 60.

In an embodiment, the assembling method for the battery pack further includes: connecting the first battery 20 and the second battery 30 through a conductive connector. As such, it is ensured that the first battery 20 and the second battery 30 may be further fixed through the conductive connector, and it may be ensured that the first battery 20 and the second battery 30 may be reliably fixed in the battery box 10.

The conductive connector may include a circuit board, and the circuit board may include structures such as a voltage acquisition part, a temperature acquisition part, etc. In this case, the circuit board may be connected to the first battery 20 and the second battery 30. For example, a voltage acquisition part of the circuit board may be directly connected to the first battery 20, another voltage acquisition part of the circuit board may be directly connected to the second battery 30, and the position of the circuit board is relatively fixed. For example, the circuit board may be fixed on the battery box 10, under the circumstances, the first battery 20 and the second battery 30 may be fixed on the battery box 10 through the circuit board, so as to ensure that the first battery 20 and the second battery 30 may be reliably fixed in the battery box 10.

In an embodiment, the assembling method for the battery pack further includes: connecting the first battery 20 and the second battery 30 through the bus bar 40. As such, the first battery 20 and the second battery 30 may be fixed through the bus bar 40, and it may be ensured that the first battery 20 and the second battery 30 have relatively fixed positions.

The first battery 20 and the second battery 30 are connected through the bus bar 40, which may be arranged before arranging the first battery 20 and the second battery 30 adjacently in the battery box 10. Alternatively, the first battery 20 and the second battery 30 are connected through the bus bar 40, which may be arranged after arranging the first battery 20 and the second battery 30 adjacently in the battery box 10.

It should be noted that it is not excluded that the conductive connector may be simultaneously connected to the third battery 60, the disclosure is not limited thereto, and a corresponding conductive connector may be selected to connect the batteries according to actual needs.

In an embodiment, an assembly method for battery pack is applied to form the above-described battery pack.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, comprising:
a battery box (10);
a first battery (20), which is disposed in the battery box (10), and comprises a first stack surface (21), wherein the first stack surface (21) comprises a first peripheral region (211) and a first intermediate region (212), and the first peripheral region (211) is arranged around the first intermediate region (212);
a second battery (30), which is disposed in the battery box (10) and adjacent to the first battery (20), and comprises a second stack surface (31), wherein the second stack surface (31) comprises a second peripheral region (311) and a second intermediate region (312), and the second peripheral region (311) is arranged around the second intermediate region (312);
wherein the first stack surface (21) and the second stack surface (31) are arranged directly opposite to each other, such that at least a part of the first peripheral region (211) is arranged directly opposite to the second peripheral region (311), and at least a part of the first intermediate region (212) is arranged directly opposite to the second intermediate region (312), and a gap (1) is defined between the at least a part of the first peripheral region (211) and the second peripheral region (311).

2. The battery pack according to claim 1, wherein the first peripheral region (211) comprises two first segment bodies (2111) and two second segment bodies (2112) opposite to each other, both ends of each of the first segment bodies (2111) are respectively connected to the two second segment bodies (2112), each of the first segment bodies (2111) extends in a length direction (D1) of the first battery (20), and at least a part of each of the second segment bodies (2112) extends in a width direction (D2) of the first battery (20);
wherein the gap (1) is defined between at least a part of each of the first segment bodies (2111) and the second peripheral region (311).

3. The battery pack according to claim 2, wherein the gap (1) is defined between the at least a part of each of the second segment bodies (2112) and the second peripheral region (311).

4. The battery pack according to claim 2, wherein each of the first segment bodies (2111) is substantially a first plane, and/or, each of the second segment bodies (2112) is substantially a second plane.

5. The battery pack according to claim 1, wherein a size of the gap (1) is in a range of 0.2 mm to 1 mm.

6. The battery pack according to claim 5, wherein the size of the gap (1) is in a range of 0.4 mm to 0.6 mm.

7. The battery pack according to claim 1, wherein the at least a part of the first intermediate region (212) is in direct contact with the second intermediate region (312);
or, the first intermediate region (212) and the second intermediate region (312) are not in contact.

8. The battery pack according to any one of claims 1-7, wherein an area of the first peripheral region (211) and an area of the second peripheral region (311) are substantially equal, and an area of the first intermediate region (212) and an area of the second intermediate region (312) are substantially equal.

9. The battery pack according to any one of claims 1-7, wherein the first battery (20) further comprises a first terminal assembly (22), the first terminal assembly (22) is disposed on the first stack surface (21), the second battery (30) further comprises a first recess (32), the first recess (32) is disposed toward the first stack surface (21), and a part of the first terminal assembly (22) is located in the first recess (32);
wherein the first recess (32) is located outside of the second stack surface (31), and an area of the first stack surface (21) is greater than an area of the second stack surface (31).

10. The battery pack according to any one of claims 1-7, wherein the first battery (20) further comprises a first terminal assembly (22) and a second recess (23), the first terminal assembly (22) is disposed in the second recess (23), and the second recess (23) is disposed toward the second battery (30), and the second recess (23) is located outside of the first stack surface (21).

11. The battery pack according to any one of claims 1-7, further comprising a conductive connector, the conductive connector is connected to the first battery (20), and the conductive connector is connected to the second battery (30), so as to fix the first battery (20) and the second battery (30).

12. The battery pack according to claim 11, wherein the conductive connector comprises a bus bar (40), the bus bar (40) is connected to the first battery (20), and the bus bar (40) is connected to the second battery (30).

13. The battery pack according to any one of claims 1-7, wherein the first battery (20) is bonded to the battery box (10), and the second battery (30) is bonded to the battery box (10).

14. The battery pack according to any one of claims 1-7, wherein the battery box (10) is provided with a fixing bracket (50), the fixing bracket (50) is connected to the first battery (20), and the fixing bracket (50) is connected to the second battery (30).

15. The battery pack according to claim 14, wherein the battery pack further comprises a third battery (60), the third battery (60) is arranged in the battery box (10), the fixing bracket (50) and the battery box (10) are detachably arranged, and the fixing bracket (50) is not fixedly connected to the third battery (60), such that the third battery (60) is prevented from blocking the first battery (20) and the second battery (30) from being simultaneously detached from the battery box (10) along with the fixing bracket (50).

16. The battery pack according to claim 1, wherein both the first battery (20) and the second battery (30) are quadrangular prism batteries; and/or, the first battery (20) further comprises a surrounding surface (24), the surrounding surface (24) is arranged adjacent to the first stack surface (21), a transition surface (25) is provided between the surrounding surface (24) and the first stack surface (21), and the transition surface (25) is a curved surface.

17. A method for assembling a battery pack, the method comprising: arranging a first battery (20) and a second battery (30) adjacently in a battery box (10) in a battery stacking direction of the battery pack, wherein a gap (1) is defined between the first battery (20) and the second battery (30) directly opposite to each other, such that a pre-pressing force is avoided from being generated between the first battery (20) and the second battery (30), and the battery stacking direction is perpendicular to larger surfaces of the first battery (20) and the second battery (30).

18. The method for assembling the battery pack according to claim 17, wherein the step of arranging the first battery (20) and the second battery (30) adjacently in the battery box (10) comprises:
arranging the first battery (20) and the second battery (30) in the battery box (10) in sequence;
or arranging the first battery (20) and the second battery (30) simultaneously in the battery box (10).

19. The method for assembling the battery pack according to claim 18, wherein the step of arranging the first battery (20) and the second battery (30) adjacently in the battery box (10) further comprises:
bonding the first battery (20) to the battery box (10), and bonding the second battery (30) to the battery box (10).

20. The method for assembling the battery pack according to claim 18, wherein the step of arranging the first battery (20) and the second battery (30) adjacently in the battery box (10) further comprises:
connecting the first battery (20) and the second battery (30) to the battery box through a fixing bracket (50);
wherein the fixing bracket (50) is detachably connected to the battery box (10), such that after a connection between the fixing bracket (50) and the battery box (10) is released, the first battery (20) and the second battery (30) are simultaneously detached along with the fixing bracket (50).

21. The method for assembling the battery pack according to claim 20, further comprising:
arranging a third battery (60) in the battery box (10), wherein the third battery (60) is not fixedly connected to the fixing bracket (50), such that the third battery (60) is prevented from blocking the first battery (20) and the second battery (30) from being simultaneously detached from the battery box (10) along with the fixing bracket (50).

22. The method for assembling the battery pack according to claim 17, further comprising:
connecting the first battery (20) and the second battery (30) through a bus bar (40).
